# FASCICULE DE BREVET EUROPEEN

(11) **EP 1 507 094 B1**
(45) Date de publication et mention de la délivrance du brevet: **01.10.2008**
(21) Numéro de dépôt: 04018243.8
(22) Date de dépôt: 02.08.2004
(51) Int. Cl.: F16F 1/12, F16F 1/04

(54) **Dispositif pour l'accrochage d'une extrêmité d'un ressort hélicoidal**
Vorrichtung zum Befestigen eines Spiralfederendes
Device for fastening the end of a coil sping

(30) Priorité: 12.08.2003 FR 0309870
(43) Date de publication de la demande: 16.02.2005
(73) Titulaire: MANTION S.A., 25000 Besançon (FR)
(72) Inventeur: Requet, Claude, 25170 Chaucenne (FR)
(74) Mandataire: Bugnion Genève

(56) Documents cités:
- DE-C- 697 877
- US-A- 2 400 425
- US-A- 2 661 206
- PATENT ABSTRACTS OF JAPAN vol. 1996, no. 03, 29 mars 1996 (1996-03-29) -& JP 07 293616 A (MITSUBISHI ELECTRIC CORP), 7 novembre 1995 (1995-11-07)

## Description

La présente invention concerne un dispositif pour l'accrochage d'une extrémité d'un ressort hélicoïdal et le réglage de la tension du ressort, comprenant une plaquette munie de deux séries de trous espacés d'une distance approximativement égale au diamètre des spires du ressort, les trous d'une série étant décalés par rapport à ceux de l'autre série pour permettre l'engagement progressif des spires d'extrémité du ressort dans lesdits trous, la plaquette étant munie d'un dispositif de préhension et d'accrochage.

De tels dispositifs sont connus, par exemple du US-A-2,400,425, et nous avons représenté un exemple à la figure 1. La plaquette 1 comprend deux séries de trous dans les quels les spires d'extrémité du ressort 2 peuvent s'engager. La plaquette comprend une partie 3 munie d'un trou 4. La partie 3 sert à la préhension du dispositif pour le fixer sur le ressort 2, tandis que le trou 4 sert à accrocher l'ensemble à on crochet ou similaire. Pour régler la tension du ressort on tourne la plaquette ou les deux pour avancer ou reculer par rapport aux spires d'extrémité ce réglage doit des faire en décrochant la plaquette et la plage de réglage reste limitée et imprécise.

On a aussi proposé de visser une tige filetée présentant un pas de vis correspondant à l'hélice intérieure des spires et dont l'autre extrémité est munie d'un moyen d'accrochage. Ce dispositif présente une plus grande plage de réglage possible et un réglage assez précis.

L'inconvénient est que sous la tension les spires peuvent glisser par rapport au filet de la tige filetée modifiant le réglage souhaité.

Dans le US-A-2,661,206 on propose des pièces cylindriques avec un pas de vis intérieur ou extérieur pour tenir les spires d'extrémité d'un ressort. Une tige filetée d'accrochage peut être fixée sur une pièce cylindrique permettant de régler la tension du ressort.

La présente invention a pour but de proposer un dispositif palliant les inconvénients des dispositifs connus.

Le dispositif selon l'invention caractérisé par le fait que le dispositif de préhension et accrochage comprend une tige filetée dont une extrémité est munie d'un moyen d'accrochage, que ladite tige filetée s'engage dans un taraudage solidaire de ladite plaquette et dont l'axe est parallèle à l'axe du ressort, e que la plaquette est configurée entre les séries de trous pour permettre le passage de ladite tige filetée et que la plaquette est munie entre les deux séries de trous d'une paroi cylindrique abritant ledit taraudage.

L'avantage de ce dispositif est qu'il permet par la plaquette un accrochage solide du ressort tout en permettant une grande plage de réglage précis de la tension du ressort en engageant plus ou moins la tige filetée dans le taraudage solidaire de la plaquette.

Enfin, la plaquette peut être formée par deux parties complémentaires en tôle étampée.

L'invention sera décrite à l'aide du dessin annexé représentant deux variantes d'exécution à titre d'exemples non limitatif.

La figure 1 représente un ressort avec un dispositif de fixation connu décrit précédemment.

La figure 2 représente en coupe une tige filetée.

La figure 3 représente en perspective une plaquette selon l'invention.

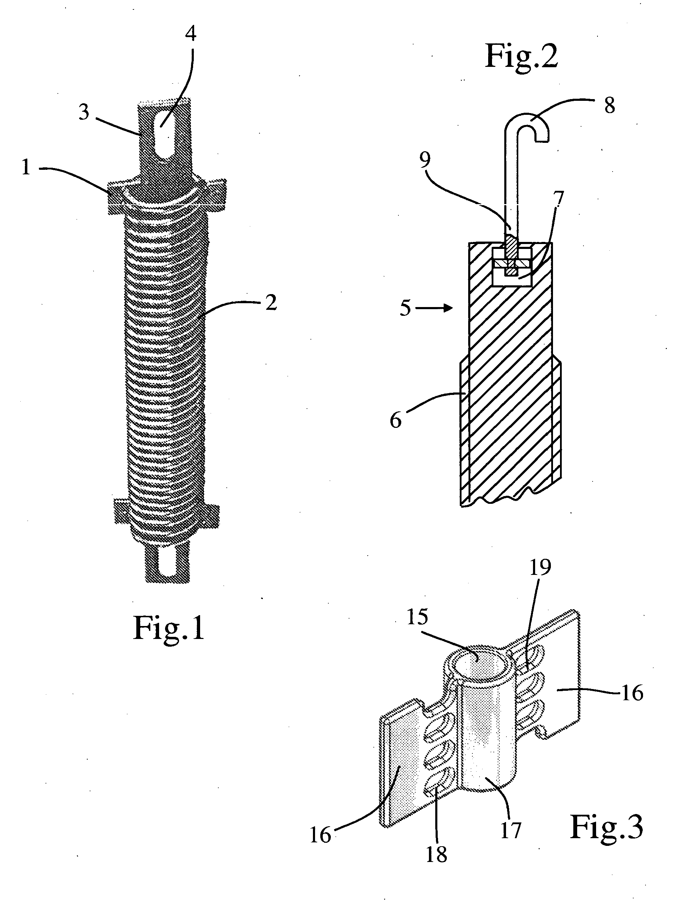

A la figure 2, une tige 5 munie sur une partie d'un filetage 6 et sur sa partie supérieure d'un crochet 8 libre en rotation engagé à travers un trou 9 dans un évidemment 7 de la tige 5. L'extrémité du crochet est prisonnière dans l'évidemment 7 par un circlip ou emboutissage de l'extrémité du crochet ou tout autre moyen équivalent permettant de tourner la tige sans la décrocher de l'élément auquel est accrochée. Au lieu et place du crochet 8 on pourrait avoir tout autre moyen permettant de lier l'extrémité de la tige 5 à un autre élément.

A la figure 3 on a représenté une plaquette P₂ formée de deux parties plates 16 s'étendant de part et d'autre d'une partie cylindrique 17 munie d'un taraudage 15. Deux séries de trous 18 et se trouvent de part et d'autre de la partie cylindrique 17, les trous d'une série étant décalés en hauteur par rapport à ceux de l'autre série pour permettre l'engagement des spires d'extrémité d'un ressort. La tige 5 peut être vissée dans le trou taraudé 15 sa partie inférieure pouvant sans problème dépasser la partie cylindrique 17 en s'enfonçant à l'intérieur d'un ressort dont les premières spires sont engagées dans les deux séries de trous 18, 19 (comme à la figure 1). Pour régler la tension du ressort il suffit de visser ou dévisser la tige 5. L'autre extrémité du ressort peut aussi être munie du même dispositif permettant ainsi une plus grande plage de réglage.

La plaquette P₂ de la figure 3 est d'une construction compacte et elle peut être fabriquée par l'assemblage de deux parties complémentaires faites en tôle étampée chacune comprenant deux parties plates réunies par une paroi semi-cylindrique.

## Revendications

1. Dispositif pour l'accrochage d'une extrémité d'un ressort hélicoïdal et le réglage de la tension du ressort, comprenant une plaquette (1; P₂) munie de deux séries de trous espacées (18, 19) d'une distance approximativement égale au diamètre des spires du ressort (2), les trous d'une série étant décalés par rapport à ceux de l'autre série pour permettre l'engagement progressif des spires d'extrémité du ressort dans lesdits trous, la plaquette étant munie d'un dispositif de préhension et d'accrochage (3, 4; 5, 8), **caractérisé par le fait que** le dispositif de préhension et accrochage comprend une tige filetée (5) dont une extrémité est munie d'un moyen d'accrochage (8), que ladite tige filetée (5) s'engage dans un taraudage (15) solidaire de ladite plaquette (P₂) dont l'axe est parallèle à l'axe du ressort, que la plaquette est configurée (17) entre les séries de trous (18, 19) pour permettre le passage de ladite tige filetée (5) et que la plaquette (P₂) est munie entre les deux séries de trous (18, 19) d'une paroi cylindrique (17) abritant ledit taraudage (15).

2. Dispositif selon la revendication 1, **caractérisé par le fait que** la plaquette (P₂) est formée par deux parties complémentaires en tôle étampée.

## Claims

1. A device for fastening one end of a helical spring and adjusting the tension of the spring, comprising a plate (1; P₂) provided with two series of holes (18, 19) spaced apart by a distance approximately equal to the diameter of the turns of the spring (2), the holes of one series being offset with respect to those of the other series to allow the progressive engagement of the end turns of the spring in said holes, and the plate being provided with a gripping and holding device (3, 4; 5, 8), **characterised in that** the gripping and fastening device comprises a threaded rod (5), one end of which is provided with a fastening means (8), **in that** said threaded rod (5) engages in a tapped hole (15) integral with said plate (P₂) whose axis is parallel to the spring axis, **in that** the plate is configured (17) between the series of holes (18, 19) to permit the passage of said threaded rod (5) and **in that** the plate (P₂) is provided between the two series of holes (18, 19) with a cylindrical wall (17) containing said tapped hole (15).

2. The device as claimed in claim 1, **characterised in that** the plate (P₂) is formed by two complementary stamped sheet-metal parts.

## Patentansprüche

1. Vorrichtung zum Befestigen eines Endes einer Schraubenfeder und zur Einstellung der Spannung der Feder, eine Plakette (1; P₂) umfassend, welche zwei Serien von Löchern (18, 19) mit einem Abstand, der ungefähr dem Durchmesser der Windungen der Feder (2) entspricht, besitzt, wobei die Löcher einer Serie hinsichtlich jener der anderen Serie verschoben sind, um den progressiven Eingriff der Windungen am Ende der Feder in besagten Löchern zu erlauben, wobei die Plakette mit einer Greif- und Befestigungsvorrichtung (3, 4; 5,8) ausgestattet ist, **dadurch gekennzeichnet, daß** die Greif- und Befestigungsvorrichtung einen Gewindeschaft (5) aufweist, dessen eines Ende mit Befestigungsmitteln (8) ausgestattet ist, **daß** besagter Gewindeschaft (5) in eine in der Plakette (P₂) angebrachten Ausbohrung (15) eingreift, deren Achse parallel zur Achse der Feder ist, **daß** die Plakette (17) zwischen den Serien von Löchern (18, 19) derart gestaltet ist, um den Durchgang des besagten Gewindeschafts (5) zu erlauben, und **daß** die Plakette (P₂) zwischen den zwei Serien von Löchern (18, 19) eine zylindrische Wand (17) aufweist, welche die besagte Ausbohrung (15) beherbergt.

2. Vorrichtung gemäß Anspruch 1, **dadurch gekennzeichnet, daß** die Plakette (P₂) durch zwei komplementäre Teile aus gestanztem Blech gebildet wird.
